# EUROPEAN PATENT APPLICATION

(11) **EP 3 569 350 A1**
(43) Date of publication of application: **20.11.2019**
(21) Application number: 19174513.2
(22) Date of filing: 14.05.2019
(51) Int. Cl.: B23K 37/053, B23B 5/16, B23Q 9/00

(54) **CUTTING APPARATUS FOR PLASTIC PIPES**

(30) Priority: 16.05.2018 IT 201800005428
(71) Applicant: IPM S.R.L., 48022 Lugo (Ravenna) (IT)
(72) Inventor: ARGNANI, Claudio, 48022 Lugo (RA) (IT)
(74) Representative: Cicconetti, Andrea

(57) **Abstract**

A cutting apparatus (1) for cutting a pipe (50) of plastics, comprising cutting means (11, 12) for cutting the pipe (50), a supporting ring (2) rotating about a rotation axis (Z) and supporting the cutting means (11, 12) arranged to abut against and interact with an external surface (50a) of the pipe (50), when inserted into the supporting ring (2) and locked in a working configuration (A), supporting means (3) for supporting the supporting ring (2) rotatably about the rotation axis (Z) and slidably along two cutting directions (X, Y) almost orthogonal to each other and to the rotation axis (Z), actuating means (21, 22) acting on the supporting means (3) for moving the supporting ring (2) with respect to the pipe (50) along a working path (P) so that the cutting means (11, 12) penetrate and cut the pipe (50) according to a cutting trajectory that develops around the external surface (50a) and radially inwards to the pipe (50); locking means (25, 26) for supporting and reversibly locking in the working configuration (A) the pipe (50), that includes a first vice (25) comprising a couple of first jaws (25a) and arranged facing the supporting ring (2), and a second vice (26) comprising a couple of second jaws (26b) and arranged facing a fixed frame (4) for supporting the supporting means (3).

## Description

The present invention relates to machines and apparatuses for cutting pipes, and it relates in particular to a cutting apparatus arranged to perform cuts and chamfers on pipes of plastics. Pipes of plastics are widely used for collecting, distributing and supplying fluids, for example for collecting rain and wastewater, distributing drinkable water, combustible gas, etcetera.

Pipes are generally obtained by means of continuous extrusion processes wherein plastic material duly heated and taken to the plastic state is forced through a suitable die to form a continuous tubular element that must be cut in order to originate pipes of desired length. The pipes thus obtained must then be further cut to originate parts or shorter sections, according to the specific needs and applications.

To this end, they are known cutting apparatuses able to cut pipes, i.e. to section completely one cylindrical side wall thereof according to a plane transversal to the longitudinal axis of the pipe and to separate parts. Cutting can also comprise chamfering external sharp edges of pipe ends originated from cutting i.e. removing by an inclined cut, for example of 45°, the end prism of the aforesaid sharp edges.

One first type of cutting apparatuses comprises one or more cutting discs, or mills, rotated about respective axis and coaxially around the pipe to be cut, suitably locked, so as to incise and radially and progressively cut from outside inwardly to the cylindrical wall of the pipe along its whole circumference. Rotating mills are generally mounted on rings or crowns also rotating, in particular rotatably supported by a fixed frame of the apparatus and rotated around an axis almost coaxial and coinciding with a longitudinal axis of the pipe.

However, such cutting apparatuses, also known as planetary cutters, have several disadvantages.

Firstly, these cutting apparatuses are rather expensive due to complex means and mechanisms necessary to rotate mills mounted on the ring which is in turn rotated. Furthermore mills, rotating at high speeds for performing precise and top-quality cuts and chamfers, are very noisy and produce a huge amount of swarf in dust form that, in addition to getting dispersed in the surrounding environment, penetrates inside the pipe which therefore needs to be suitably cleaned upon being cut.

Another disadvantage of the aforesaid apparatuses is the low quality of chamfered cuts obtained in case the pipe is not perfectly cylindrical, with a deformed section, for example oval. As known, the chamfered cut is made by coupling two suitably shaped mills and sized such as to make, penetrating into the pipe cylindrical wall of a predefined quantity, a chamfer of predetermined dimensions, generally of half the thickness of the pipe side wall. Clearly, in case the pipe is not perfectly cylindrical, the mills, in their rotation about the latter, penetrate in an uneven manner in the cylindrical wall making a chamfer along the circumference with a variable size.

One second type of cutting apparatuses comprises tools with cutting edges, or knives, rotated around the pipe and moving from outside inwardly to the pipe thereof so as to incise and cut the cylindrical wall of the latter along its whole circumference. The tools are generally mounted on respective supporting arms rotatably fixed to a rotating crown or ring such as to rotate with the latter about an axis coinciding with the pipe axis and rotate with respect to the rotating ring so as to move the tools towards the pipe external surface and progressively deep down so as to perform the cut thereof.

These cutting apparatuses too are rather expensive and complex due to means and members required to move the supporting arms mounted on the rotating means. Furthermore, knives or tools with sharp edges performing a continuous cut on the pipe cylindrical wall produce long swarf difficult to suck and that can twist about the apparatus cutting means creating possible malfunctions and requiring periodic and constant maintenance.

Due to the rotation around the pipe, these cutting apparatuses too have the disadvantage that they make low quality chamfered cuts when the pipe is not perfectly cylindrical.

One further disadvantage of the above described known cutting apparatuses is that in cutting pipes made of polyolefin plastics, for example polypropylene or polyethylene, the cutting tools tend to heat significantly and swarf of material generated by cutting can melt and adhere to the pipe outer surface and/or tools themselves thus requiring additional cleaning operations on the pipe and tools.

One object of the present invention is to improve the known cutting apparatuses for cutting and chamfering plastic pipes.

Another object is to provide a cutting apparatus that makes it possible to perform precise and regular cuts also on pipes that are nor perfectly cylindrical.

One further object is to implement a cutting apparatus that is little noisy and able to generate, while cutting, fragmented non-continuous and large-size swarf that can therefore be more easily sucked and recycled for later processing.

One still further object is to provide a cutting apparatus that is able to generate, while cutting, swarf only outside the pipe and not inside it.

Another further object is to provide a cutting apparatus that allows to cut clearly and precisely pipes of any plastic material, even made of polyolefin plastics, without causing swarf melting.

One still further object is to implement a cutting apparatus having a simple and cost-effective structure and efficient and reliable functioning.

These and other objects are obtained by a cutting apparatus according to one or more of the hereinafter reported claims.

The invention shall be better understood and implemented referring to the enclosed drawings showing an exemplary and non-limiting embodiment, wherein:
- Figure 1 is a perspective view of the cutting apparatus of the invention associated with a pipe of plastic material to be cut;
- Figure 2 is a plan view from above of the apparatus of Figure 1;
- Figure 3 is a front view of the apparatus of Figure 1 wherein pipe locking means was removed to better show cutting tools fixed to a supporting ring;
- Figure 4 is a section according to the plane IV-IV of Figure 3;
- Figure 5 is an exploded and perspective view of the apparatus of Figure 3;
- Figure 6 is a plan enlarged view of a pipe locking vice;
- Figure 7 is a front view of a jaw of the locking vice of Figure 6;
- Figure 8 is a perspective view of the jaw of Figure 7;
- Figure 9 is a section according to the plane IX-IX of Figure 7;
- Figures 10a to 10d are front views of the cutting apparatus of the invention, in which some parts were removed to better highlight the cutting tools fixed to the supporting ring, in four different operating positions.

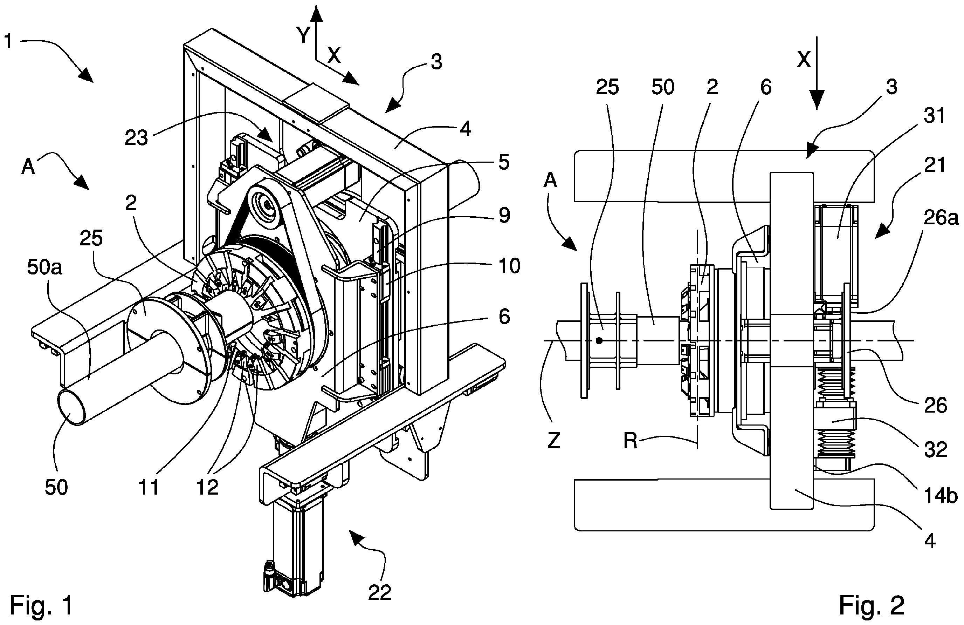

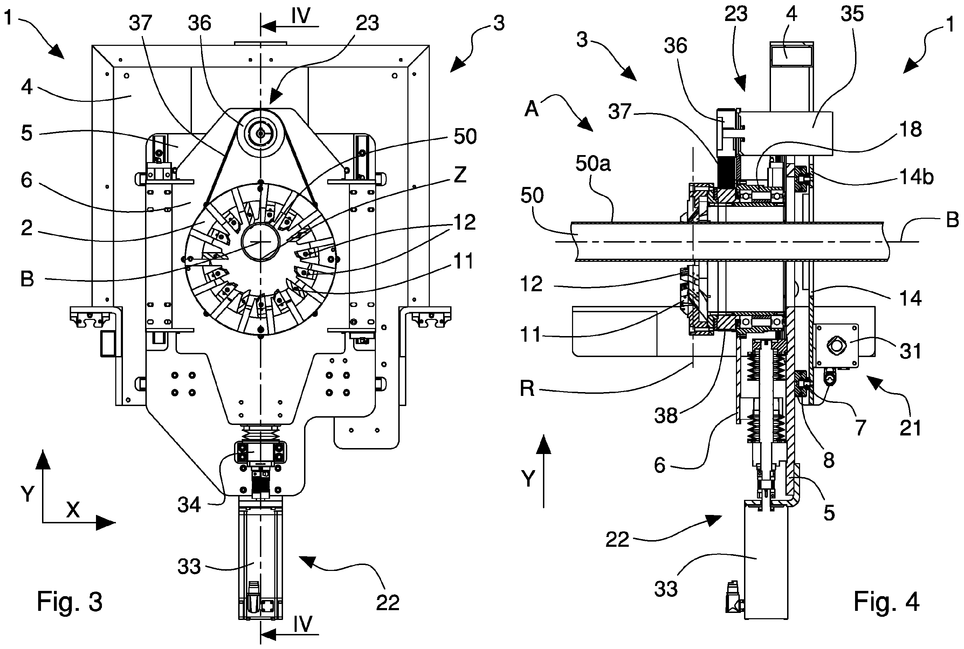

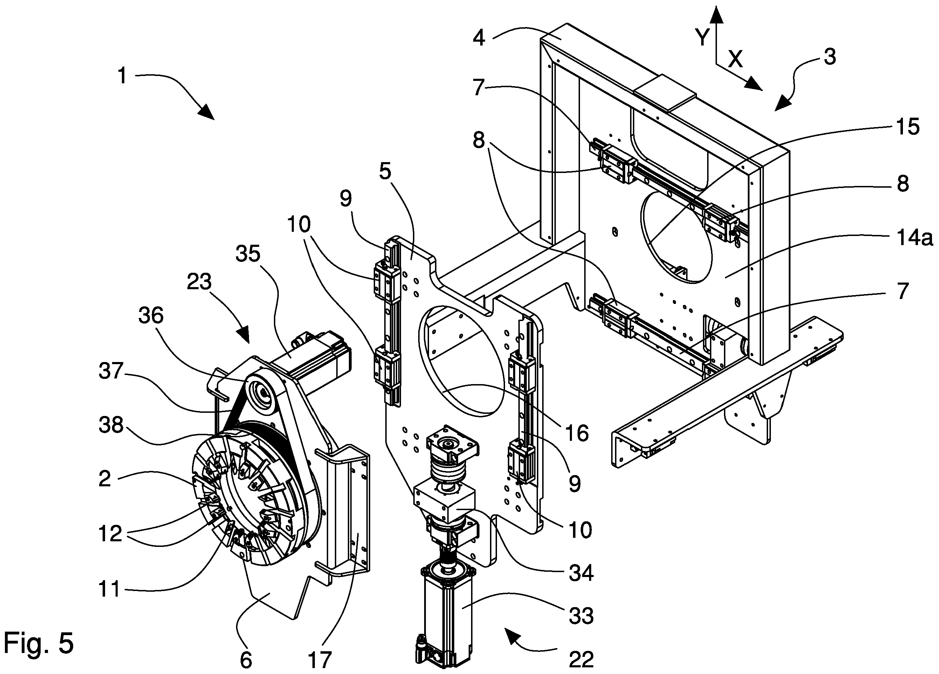

Referring to figures 1 to 5, a cutting apparatus 1 according to the invention is shown arranged for cutting a pipe 50 of plastics and comprising cutting means 11, 12 adapted to cut the pipe 50 and a supporting ring or crown 2 rotating about a rotation axis Z and supporting the cutting means 11, 12. In particular the latter ones are fixed to the supporting ring 2 and arranged such as to abut with respective sharp edges against and interact with an external surface 50a of the pipe 50. The latter is inserted inside the supporting ring 2 and is supported therein and reversibly locked in a working configuration A by locking means 25, 26.

The pipe 50 in the working configuration A is parallel to the rotation axis Z, in particular with a respective longitudinal axis B that is parallel, though not aligned or coaxial, to the rotation axis Z.

The cutting apparatus 1 also comprises supporting means 3 for supporting the supporting ring 2 rotatably about the rotation axis Z and slidably along two cutting directions X, Y almost orthogonal to each other and to the rotation axis Z. More precisely the supporting means 3 allows the supporting ring 2 to be moved along a substantially horizontal first cutting direction X and along a substantially vertical second cutting direction Y i.e., on a regulation plane R that is vertical and orthogonal to the rotation axis Z.

The cutting apparatus 1 is provided with actuating means 21, 22 acting on the supporting means 3 and duly controlled by a control unit of the cutting apparatus 1, not shown, to move the supporting ring 2 with respect to the pipe 50 along a determined working path P so that the cutting means 11, 12 penetrates and cuts the pipe 50 according to a cutting trajectory that develops around the external surface 50a, in particular circumferentially, and radially inwardly to the pipe 50, as better explained in the hereinafter description.

The cutting means comprises one or more cutting tools 11 adapted to carry out a cut or incision passing through the side wall of the pipe 50 and/or one or more chamfering tools 12 able to perform chamfers on external sharp edges of the pipe ends originated by cutting i.e. removing by an inclined cut, for example of 45°, the end prism of the aforesaid sharp edges. In the illustrated embodiment, the cutting apparatus 1 of the invention comprises a plurality of cutting tools 11 and a plurality of chamfering tools 12 fixed, angularly spaced apart, to the supporting ring 2 for chamfer-cutting the pipe 50. More precisely, the cutting means 11, 12 is fixed to a front face of the supporting ring 2 and are oriented towards the rotation axis Z of the latter, with substantially radial trend, such as to abut against the external surface 50a of the pipe 50. The number of the cutting tools 11 and the number of the chamfering tools 12 and the distribution thereof on the supporting ring 2 (for example with the cutting tools 11 separated by two chamfering tools 12 in the shown embodiment) depend on the type of plastic material, on the diameter and thickness of the pipe 50 to be cut.

It is also contemplated to provide the cutting apparatus 1 with only a plurality of cutting tools 11 or a plurality of chamfering tools 12 to perform cuts or chamfers on pipes 50, on the external sharp edges of pipe ends.

The supporting means 3 is connected to a fixed frame 4, in turn fixed to a pallet of the cutting apparatus 1 not shown in the figures, and comprises a first slide 5 and a second slide 6.

The first slide 5 is slidably connected to the fixed frame 4 and is movable along the first cutting direction X, while the second slide 6 is slidably connected to the first slide 5 and is movable along the second cutting direction Y. The second slide 6 supports the supporting ring 2 rotatably around the rotation axis Z.

First guiding means 7, 8 is provided for slidably connecting the first slide 5 to the fixed frame 4 and second guiding means 9, 10 is provided for slidably connecting the second slide 6 to the first slide 5. The first guiding means comprises, for example, first guide rails 7 to which first carriages 8 are slidably engaged. Similarly, the second linear guiding means comprises, for example, second guide rails 9 to which second carriages 10 are slidably engaged.

In the embodiment shown, the fixed frame 4 comprises a first supporting wall 14, substantially orthogonal to the rotation axis Z and almost vertical. Two first guide rails 7 arranged spaced apart from each other and parallel to the first cutting direction X are fixed to a first side 14a of the supporting wall 14. Two first carriages 8 to which the first slide 5 is fixed are slidably coupled to each of the first guide rails 7.

First actuating means 21 connected to, and acting on, the first slide 5 is fixed to a second side 14b, opposite to the first side 14a, of the supporting wall 14 of the fixed frame 4. In the illustrated embodiment, the first actuating means 21 comprises, for example, a first rotary electric motor 31 and a first screw-nut device 32 rotatably driven by the first rotary electric motor 31 and arranged to linearly move the first slide 5. More precisely, the first screw-nut device 32 comprises a first screw rotated by the first motor 31 and coupled to a first nut so as to linearly move the latter along the first cutting direction X. The first nut is fixed to the first slide 5.

Alternatively, the first actuating means 21 can comprise a linear electric, pneumatic or hydraulic actuator, fixed to the fixed frame 4 and directly acting on the first slide 5.

The supporting wall 14 is provided with a first opening 15 for the passage of the pipe 50.

The first slide 5 comprises a first plate arranged substantially parallel to the supporting wall 14. A first side of the first slide 5 is fixed to the first carriages 8 of the first guiding means 7, 8; two second guide rails 9 of second guiding means, arranged spaced apart from each other and parallel to the second cutting direction Y, and second actuating means 22 connected to, and acting on, the second slide 6 are fixed to a second side of the first slide 5, opposite to the first side.

In the illustrated embodiment, the second actuating means 22 comprises, for example, a second rotary electric motor 33 and a second screw-nut device 34 rotatably driven by the second rotary electric motor 33 and arranged to linearly move the second slide 6. More precisely, the second screw-nut device 34 comprises a first screw rotated by the second motor 33 and coupled with a second nut so as to linearly move the latter along the second cutting direction Y. The second nut is fixed to the second slide 6.

Alternatively, the second actuating means 22 can comprise a linear electric, pneumatic or hydraulic actuator, fixed to the first slide 5 and acting directly on the second slide 6.

The first slide 5 is provided with a second opening 16 for the passage of the pipe 50.

The second slide 6 comprises a second plate arranged almost parallel to the supporting wall 14 and fixed by means of a couple of brackets 17 to the second carriages 10 of the second guiding means 9, 10. The second slide 6 comprises a metal pipe 18 fixed to the second plate and rotatably supporting, in particular by means of rolling bearings, the supporting ring 2. Additional actuating means 23 arranged to rotate the supporting ring 2 about the rotation axis Z is fixed to the second plate of the second slide 6.

The additional actuating means 23 comprises, for example, a third rotary electric motor 35 which rotates the supporting ring 2 through pulleys and belts. More precisely, one first pulley 36, which rotates by means of a belt 37 a second pulley 38 connected and coaxial to the supporting ring 2, is fixed to a shaft of the third rotary electric motor 35.

The locking means of the pipe 50 comprises a first vice 25 arranged facing the supporting ring 2 and a second vice 26 arranged facing the vertical wall 14 of the fixed frame 4. The first vice 25 and the second vice 26 respectively comprise a couple of movable first jaws 25a and a couple of second jaws 26b mutually moving closer or further for locking or releasing the pipe 50. The jaws 25a, 26a are supported and moved by movement means of the known type and not illustrated in the figures.

The cutting apparatus 1 of the invention comprises cooling means 40 arranged to cool, in particular by means of an air flow or air jets, in particular compressed air, the cutting tools 11 and chamfering tools 12. Thereby, while cutting pipes made of polyolefin plastics, for example polypropylene or polyethylene, air cooling prevents the cutting means 11, 12 from heating exceedingly so as to prevent swarf of plastic material generated by cutting from melting and adhering to the external surface 50a of the pipe 50 and/or to the tools thereof.

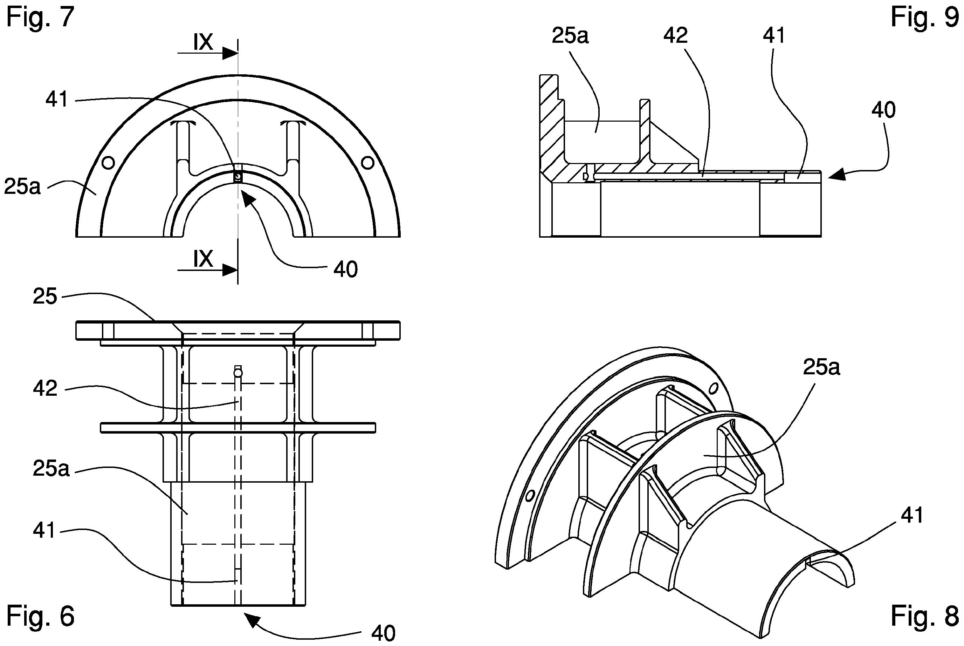

In the illustrated embodiment, the cooling means 40 is associated with the first vice 25 arranged in front of the supporting ring 2 and the cutting means 11, 12 and comprises one or more nozzles made on at least one of the first jaws 25a and able to deliver a pressurized-air jet towards the cutting means 11, 12. More precisely, and referring to figures 6 to 9, the cooling means 40 comprises at least a nozzle 41 and a supplying pipe 42 that are made in the thickness of a side wall of the first jaws 25a. The supplying pipe 42 is connected to a circuit supplying compressed-air of the cutting apparatus 1. The nozzle 41 outflows at a front face of the first jaw 25a which faces the cutting means 11, 12. The air flow or jet, that can be adjusted as per flow rate and pressure, delivered by each nozzle 41 of the first vice 25 of the locking means of the pipe 50 ensures to cool efficiently and reliably the cutting means 11, 12 while cutting the pipe 50.

The functioning of the cutting apparatus 1 of the invention provides to insert and lock the pipe 50 in the working configuration A by means of the first vices 25 and second vices 26 of the locking means. The further actuating means 23 that rotates the supporting ring 2 together with the cutting tools 11 and chamfering tools 12 around the rotation axis Z is thus driven.

At the same time the actuating means 21, 22 is driven in a coordinated and controlled way to move the supporting ring 2 along the two orthogonal directions X, Y on the regulation plane R according to the working path P such that the cutting means 11, 12 abuts against and interacts in sequence with the external surface 50a of the pipe 50, in particular penetrating into the cylindrical wall of the latter progressively according to a cutting trajectory developing around the external surface 50a, circumferentially, and radially inwardly to the pipe 50.

It must be noted that according to the number of cutting tools 11 and chamfering tools 12 mounted on the supporting ring 2 and to the speed of the latter rotating around the rotation axis Z, more cutting tools 11 and chamfering tools 12 can interact with the pipe 50 wall in rapid succession in each point of the cutting trajectory. This latter substantially coincides with the working path P along which the supporting ring 2 is moved by the actuating means 21, 22. Such working path P can comprise a set of spiral path stretches and circular path stretches, depending on whether the cutting means 11, 12 is moved or not even radially inwardly to the pipe 50 to penetrate more into the wall of the latter.

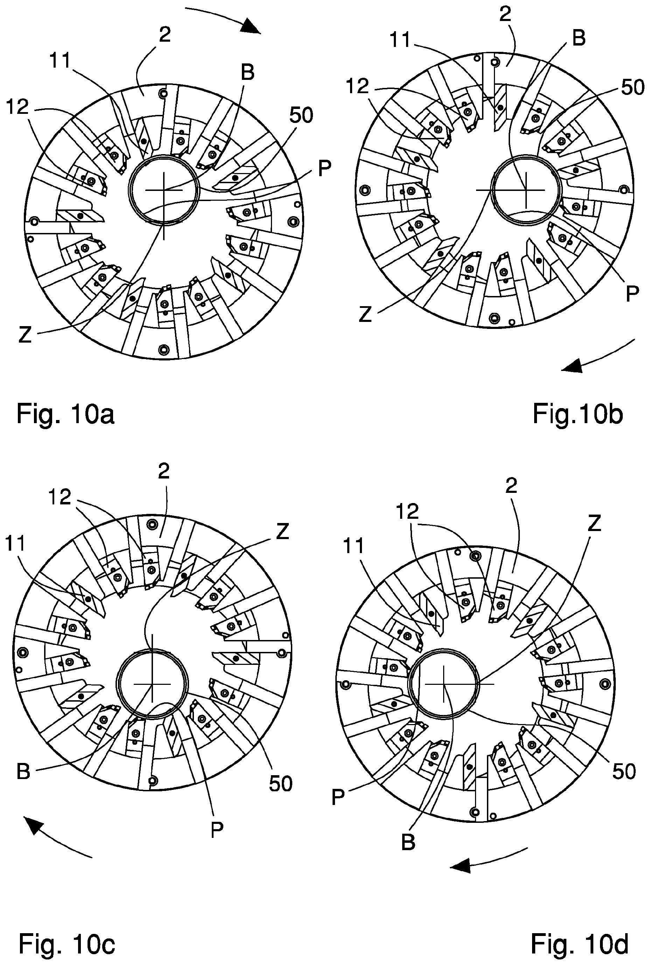

For exemplary purposes, figures 10a-10d illustrate in sequence a rotation of the supporting ring 2 around the pipe 50 according to a length of the working path P substantially circular, with constant radius, with the cutting means 11, 12 that is not radially moved inwardly to the pipe.

Depending on the pipe characteristics (diameter, thickness of the wall, plastic material), on the number and distribution of the cutting means 11, 12 on the supporting ring 2, on the rotation speed of the latter, the cutting trajectory i.e. the working path P of the supporting ring 2 can comprise a plurality of circular stretches and spiral stretches varyingly alternated. It must be noted that thanks to the supporting means 3 supporting and enabling to move the supporting ring 2 and the cutting means 11, 12, the cutting apparatus 1 of the invention allows to make precise and regular chamfered cuts on pipes of plastics even not perfectly cylindrical. In case the pipe 50 does not have a perfectly circular section it is in fact possible to suitably modify the working path P of the supporting ring 2 i.e., the cutting trajectory of the tools 11, 12 so that the latter penetrate constantly and evenly into the pipe wall 50, in particular to perform regular and even chamfers, i.e. with constant dimensions along the whole circumference.

Thanks to the plurality of cutting tools 11 and chamfering tools 12 mounted on the supporting ring 2 that cooperate to cut the pipe 50 it is then possible to work with far lower cutting speeds than required and used in known cutting apparatuses provided with mills or rotary cutting discs. Furthermore, by virtue of being mounted on the supporting ring 2 and of the motion of the latter around the longitudinal axis B of the pipe 50, the tools interact with the external surface 50a of the pipe 50 with a limited angle of incidence, moving with respect to the pipe 50 along a direction close to the direction tangent to the cylindrical external surface 50a. Thereby the cutting apparatus 1 of the invention is quieter during the cutting step than known apparatuses. Furthermore, by virtue of the lower cutting speed and favourable angle of incidence of the cutting tools, it is possible to remove fragmented swarf having larger thickness and size, i.e. not crushed, that can be more easily sucked by specific suction systems which the cutting apparatus can be provided with, and recyclable for subsequent processing.

By virtue of the cutting trajectory of the tools, the cutting apparatus 1 of the invention is furthermore able to generate swarf only outside the pipe 50 and not inside it, thus allowing to avoid subsequent cleaning operations of the pipe 50.

Finally, thanks to the cooling means 40, associated with the locking vices 25, 26 of the pipe and able to cool effectively and efficiently the cutting means 11, 12 during cutting, it is possible with the cutting apparatus 1 of the invention to clearly and precisely cut pipes of any plastic material, even made of polyolefin plastics, without causing swarf melting.

The cutting apparatus 1 with the supporting means 3 and the actuating means 21, 22, 23 associated therewith has a simple and economic structure and an efficient and reliable functioning.

## Claims

1. Cutting apparatus (1) for cutting a pipe (50) of plastics, comprising:
- cutting means (11, 12) to cut said pipe (50);
- a supporting ring (2) rotating about a rotation axis (Z) and supporting said cutting means (11, 12) arranged to abut against and interact with an external surface (50a) of said pipe (50), when inserted inside said supporting ring (2) and locked in a working configuration (A);
- supporting means (3) for supporting said supporting ring (2) rotatably about said rotation axis (Z) and slidably along two cutting directions (X, Y) almost orthogonal to each other and to said rotation axis (Z);
- actuating means (21, 22) acting on said supporting means (3) to move said supporting ring (2) with respect to said pipe (50) along a working path (P) so that said cutting means (11, 12) penetrates and cuts said pipe (50) according to a cutting trajectory that develops around said external surface (50a) and radially inwardly to said pipe (50);
**characterized in that** it comprises locking means (25, 26) for supporting and reversibly locking in said working configuration (A) said pipe (50), said locking means including a first vice (25), which comprises a couple of first jaws (25a) and is arranged facing said supporting ring (2), and a second vice (26), which comprises a couple of second jaws (26b) and is arranged facing a fixed frame (4) for supporting said supporting means (3).

2. Cutting apparatus (1) according to claim 1, wherein said cutting means comprises at least one cutting tool (11) and/or at least one chamfering tool (12).

3. Cutting apparatus (1) according to claim 1 or 2, wherein said cutting means comprises a plurality of cutting tools (11) and/or a plurality of chamfering tools (12) fixed, angularly spaced apart, to said supporting ring (2).

4. Cutting apparatus (1) according to any preceding claim, comprising a fixed frame (4) to which said supporting means (3) is connected that comprises a first slide (5) which is slidably connected to said fixed frame (4) and movable along a first cutting direction (X), and a second slide (6) which is slidably connected to said first slide (5), can be moved along a second cutting direction (Y) and rotatably supports said supporting ring (2).

5. Cutting apparatus (1) according to claim 4, comprising first guiding means (7, 8) for slidably connecting said first slide (5) to said fixed frame (4) and second guiding means (9, 10) for slidably connecting said second slide (6) to said first slide (5).

6. Cutting apparatus (1) according to claim 4 or 5, wherein said actuating means (21, 22) comprises first actuating means (21) fixed to said fixed frame (4) and arranged to move said first slide (5) along said first cutting direction (X) and second actuating means (22) fixed to said first slide (5) and arranged to move said second slide (6) along said second cutting direction (Y).

7. Cutting apparatus (1) according to claim 6, wherein said first actuating means (21) comprises a first rotary electric motor (31) and a first screw-nut device (32) rotatably driven by said first rotary electric motor (31) and arranged to linearly move said first slide (5), and wherein said second actuating means (22) comprises a second rotary electric motor (33) and a second screw-nut device (34) rotatably driven by said second rotary electric motor (33) and arranged to linearly move said second slide (6).

8. Cutting apparatus (1) according to any claim 4 to 7, comprising further actuating means (23) fixed to said second slide (6) and arranged to rotate said supporting ring (2) about said rotation axis (Z).

9. Cutting apparatus (1) according to any preceding claim, comprising cooling means (40) to cool, in particular by means of an air flow or air jets, said cutting means (11, 12).

10. Cutting apparatus (1) according to claim 9, wherein said cooling means (40) is associated with said first vice (25), in particular comprising at least one nozzle (41) and a supplying pipe (42) that are made in a side wall of at least one of said first jaws (25a) and arranged to supply an air jet toward said cutting means (11, 12).
